# EUROPÄISCHE PATENTANMELDUNG

(11) **EP 3 407 418 A1**
(43) Veröffentlichungstag der Anmeldung: **28.11.2018**
(21) Anmeldenummer: 18168674.2
(22) Anmeldetag: 23.04.2018
(51) Int. Cl.: H01M 10/6554, H01M 10/6556, H01M 10/613, H01M 10/625, F28F 3/12

(54) **ZELLMODUL FÜR ELEKTRO- UND HYBRIDFAHRZEUGE**

(30) Priorität: 22.05.2017 DE 102017208641
(71) Anmelder: AUDI AG, 85045 Ingolstadt (DE)
(72) Erfinder: STAUDENMAIER, Sascha, 85080 Gaimersheim (DE)

(57) **Zusammenfassung**

Die vorliegende Erfindung betrifft ein Zellmodul für Elektro- und Hybridfahrzeuge, bei dem in mindestens eine Außenwand des Moduls Kanäle für einen Wärmeaustausch integriert sind.

## Beschreibung

Die vorliegende Erfindung betrifft ein Zellmodul für Elektro- und Hybridfahrzeuge, bei dem in mindestens eine Außenwand des Moduls Kanäle für einen Wärmeaustausch integriert sind.

Hochvoltbatterien für Fahrzeuganwendungen enthalten in Reihe und/oder parallel geschaltete Einzelzellen. Im Betriebszustand müssen die Einzelzellen, z. B. Lithium-Ionen-Zellen, beispielsweise auf eine Betriebstemperatur erwärmt oder auch gekühlt werden, um entstehende Verlustwärme abzuführen. Hierfür sind in der Batterie geeignete Mittel zum Wärmeaustausch erforderlich. Die Einzelzellen sind üblicherweise in Zellmodulen zusammengefasst, von denen die Batterie eine Vielzahl umfasst.

Bei einer Flüssigkeitskühlung, die aus Bauraumgründen vorzugsweise angewendet wird, ist an einer mehrere Zellmodule umfassenden Baugruppe eine von Kühlflüssigkeit durchströmte Wärmeleitplatte angeordnet, mit der die Zellmodule wärmeleitend verbunden sind. Die Zellmodule werden also indirekt durch ein Gehäuse hindurch gekühlt. Es sind verschiedene Bauformen der Wärmeleitplatte vorgeschlagen worden.

DE 10 2016 008 110 A1 offenbart eine Bodenplatte für eine Batterie, insbesondere eine Traktionsbatterie, die als Wärmeleitplatte für die Batterie dient. Die Bodenplatte ist aus Strangpressprofilen hergestellt und fixiert mit Kühlwasser durchströmte Rohre, welche mäanderförmig angeordnet sind.

Aus DE 10 2010 013 025 A1 sind eine Batterie und ein Verfahren zur Herstellung einer Batterie mit einer in einem Batteriegehäuse angeordneten Kühlplatte bekannt. Das Batteriegehäuse wird durch die Kühlplatte gekühlt, in der Kühlkanäle, welche im Strangpressverfahren hergestellt werden, mäanderförmig angeordnet sind.

DE 10 2013 107 668 A1 offenbart eine Batterie mit einem zumindest einen Kühlkanal aufweisenden Zell- oder Modulträger, mit welchem Batteriezellen oder Batteriemodule thermisch verbunden sind. Bei der Herstellung des Zell- oder Modulträgers wird der Kühlkanal im selben Gussvorgang wie der Zell- oder Modulträger in diesen eingegossen.

Die Verwendung derartiger Wärmeleitplatten bringt eine Reihe von Nachteilen mit sich. Das Kühlsystem ist ineffizient, da durch mehrere Schichten (z.B. KTL-Lack, Klebstoff, Gap-Filler) hindurch gekühlt werden muss und ein Großteil der Kühlleistung an das Gehäuse verloren geht. Der Aufbau macht die Batterie komplex, teuer und schwer. Es sind Toleranzen durch Schweißverzug und etliche Toleranz-Additionen zu berücksichtigen. Es entsteht hoher Aufwand für Planung, Simulation und Konstruktion. Für die Fertigung der Batterie sind viel Fläche und hohe Investitionen notwendig. Die Suche von Undichtigkeiten im Kühlkreislauf erfordert aufwendige und teure Prüfungen. Wenn ein Teil der Kühlung undicht ist oder beschädigt wird, entsteht hoher Aufwand für Nacharbeit oder für Service bzw. Kundendienst. Dann muss die Batterie komplett zerlegt und ggf. komplett getauscht werden. Eine Undichtigkeit der Kühlung zieht den Austausch des kompletten Gehäuses nach sich.

Der Erfindung liegt daher die Aufgabe zugrunde, eine verbesserte Batterie zur Verfügung zu stellen, welche die beschriebenen Nachteile vermeidet. Darüber hinaus ist es Aufgabe der Erfindung, ein einfaches Verfahren zur Herstellung einer solchen Batterie anzugeben.

Ein Gegenstand der vorliegenden Erfindung ist ein Zellmodul für eine Batterie, insbesondere eine Traktionsbatterie für ein Kraftfahrzeug, bei dem in mindestens eine Außenwand des Moduls rohrförmige Hohlräume ("Kühlmittelkanäle") für einen Wärmeaustausch integriert sind.

Das erfindungsgemäße Zellmodul enthält mindestens eine Akkumulatorzelle (wieder aufladbare Sekundärzelle). In einer Ausführungsform enthält das Zellmodul mehrere parallel und/oder hintereinander geschaltete elektrisch verbundene Akkumulatorzellen. Beispiele für geeignete Akkumulatorzellen umfassen Lithium-Ionen-Zellen, Lithium-Polymer-Zellen, Lithium-Eisenphosphat-Zellen, Natrium-Schwefel-Zellen, und Natrium-Nickelchlorid-Zellen. In einer Ausführungsform werden Lithium-Ionen-Zellen verwendet.

Die Akkumulatorzellen oder Einzelzellen sind im Inneren des Zellmoduls angeordnet und werden von dessen Außenwänden umschlossen, die ein Zellmodulgehäuse mit einer Bodenplatte, einer Deckenplatte und vier Seitenplatten bilden. Mindestens eine Außenwand des Zellmoduls weist rohrförmige Hohlräume auf, welche sich über die gesamte Länge bzw. die gesamte Breite der Außenwand erstrecken. Diese rohrförmigen Hohlräume ("Kühlmittelkanäle") sind dafür eingerichtet, mit einem Wärmeaustauschmedium ("Kühlmittel") durchströmt zu werden. In einer Ausführungsform des Zellmoduls weist die Bodenplatte des Zellmoduls rohrförmige Hohlräume auf. In einer weiteren Ausführungsform des Zellmoduls weist die Deckenplatte des Zellmoduls rohrförmige Hohlräume auf. In einer weiteren Ausführungsform des Zellmoduls weist mindestens eine Seitenplatte des Zellmoduls rohrförmige Hohlräume auf. In einer weiteren Ausführungsform weisen mehrere der Außenwände des Zellmoduls hohlförmige Hohlräume auf, beispielsweise die Boden- und die Deckenplatte, oder zwei sich gegenüberliegende Seitenplatten, oder auch sowohl Boden- und/oder Deckenplatte und zwei sich gegenüberliegende Seitenplatten.

In einer Ausführungsform des Zellmoduls sind die rohrförmigen Hohlräume parallel zueinander angeordnet. In einer Ausführungsform wird der Abstand benachbarter rohrförmiger Hohlräume so gewählt, dass der Wärmefluss zwischen den Hohlräumen über die Außenwand vernachlässigbar ist gegenüber dem Wärmetransport durch das Wärmeaustauschmedium. Die Hohlräume liegen nicht direkt "Wand an Wand" aneinander, um einen möglichst effizienten Wärmeabtransport zu gewährleisten, weil ansonsten ein Wärmetausch zwischen Vor- und Rücklauf stattfinden würde. In einer Ausführungsform entspricht der Abstand benachbarter rohrförmiger Hohlräume mindestens einem Hohlraum-Innendurchmesser. In einer anderen Ausführungsform beträgt der Abstand ein Vielfaches eines Hohlraum-Innendurchmessers. Der Abstand benachbarter rohrförmiger Hohlräume kann aber auch kleiner als ein Hohlraum-Innendurchmesser sein.

Eine Außenwand mit parallel angeordneten rohrförmigen Hohlräumen lässt sich vorteilhaft durch Strangpressen herstellen. In einer Ausführungsform des Zellmoduls umfasst mindestens eine Außenwand des Zellmoduls ein durch Strangpressen hergestelltes Profil. In einer anderen Ausführungsform umfassen zwei Außenwände des Zellmoduls jeweils ein durch Strangpressen hergestelltes Profil. In einer weiteren Ausführungsform umfassen vier Außenwände des Zellmoduls jeweils ein durch Strangpressen hergestelltes Profil. In einer anderen Ausführungsform umfassen alle Außenwände des Zellmoduls jeweils ein durch Strangpressen hergestelltes Profil. In einer weiteren Ausführungsform umfasst das Zellmodul ein Profil mit rechteckigem Querschnitt, welches Bodenplatte, Deckenplatte und zwei einander gegenüberliegende Seitenplatten des Zellmoduls bildet. In dem von dem Profil umschlossenen Hohlraum werden die Akkumulatorzellen angeordnet.

In einer Ausführungsform besteht das Profil im Wesentlichen aus Aluminium oder einer Aluminiumlegierung.

Die rohrförmigen Hohlräume in der Außenwand des erfindungsgemäßen Zellmoduls sind dafür vorgesehen und eingerichtet, im Betriebszustand mit einem Wärmeaustauschmedium durchströmt zu werden, um die sich im Zellmodul befindenden Akkumulatorzellen zu kühlen oder zu heizen. In einer Ausführungsform ist das Wärmeaustauschmedium ein Gas, beispielsweise Luft. In einer anderen Ausführungsform ist das Wärmeaustauschmedium eine Flüssigkeit, beispielsweise Wasser, Kühlflüssigkeit, oder Öl.

In einer Ausführungsform des Zellmoduls sind die Öffnungen zweier nebeneinander liegender rohrförmiger Hohlräume durch ein hohles Verbindungselement verbunden. Durch das Verbindungselement wird eine Fluidverbindung der Hohlräume geschaffen, so dass die beiden verbundenen Hohlräume einen durchgehenden Fließpfad für das Wärmeaustauschmedium bilden.

In einer Ausführungsform ist das Verbindungselement als U-förmige Steckbrücke ausgebildet. In einer weiteren Ausführungsform weist das Verbindungselement Dichtlippen auf, welche die Öffnungen der Hohlräume abdichten, so dass zwischen dem Verbindungselement und den miteinander verbundenen Öffnungen der Hohlräume kein Wärmeaustauschmedium austreten kann. In einer Ausführungsform werden hohle U-förmige Steckbrücken verwendet, die über redundante Dichtlippen verfügen, um die Kühlmittelkanäle miteinander zu verbinden und die Steckbrücken gegenüber den Kühlkanälen abzudichten.

In anderen Ausführungsformen kann das Verbindungselement auch in den Öffnungen der Hohlräume verklebt oder kraftschlüssig in diese eingepresst werden, um eine Abdichtung zu erreichen.

In einer Ausführungsform ist jeweils eine Öffnung der beiden den größten Abstand voneinander aufweisenden rohrförmigen Hohlräume einer Außenwand an einen Wärmeaustauschmittelkreislauf angeschlossen und die übrigen Öffnungen der in der Außenwand enthaltenen rohrförmigen Hohlräume sind so jeweils paarweise mit einem Verbindungselement untereinander verbunden, dass durch die Hohlräume ein mäanderförmiger Fließpfad des Wärmeaustauschmittels gebildet wird. Durch die mäandrierende Durchströmung der Hohlräume in der Außenwand des Zellmoduls wird ein effektiver Wärmetransport erreicht. Dies ist insbesondere bei einseitig angeordneten Anschlüssen sinnvoll. Bei wechselseitig angeordneten Anschlüssen können sowohl ein mäandrierender Fließpfad wie auch eine Mehrzahl parallel angeordneter Fließpfade, die das Wärmeaustauschmittel nur in eine Richtung durchströmt, vorgesehen sein.

Der Anschluss an den Wärmeaustauschmittelkreislauf, z.B. das Kühlsystem eines Kraftfahrzeugs, erfolgt in einer Ausführungsform durch Schläuche, die mit Schellen auf Anschlussstücken, die mit jeweils einer Öffnung der beiden den größten Abstand voneinander aufweisenden rohrförmigen Hohlräume einer Außenwand (Vor- und Rücklauf des Moduls) verbunden sind, befestigt werden. In einer anderen Ausführungsform erfolgt der Anschluss des Zellmoduls an den Wärmeaustauschmittelkreislauf mit Schnellverschlusskupplungen oder sonstigen Verbindungselementen.

Dies bietet den weiteren Vorteil, dass die Zellmodule alle parallel mit Vor- und Rücklauf angebunden werden können, wodurch die maximal mögliche Temperaturspreizung zwischen den Zellmodulen extrem gering gehalten werden kann.

Im Betriebszustand wird jedes Zellmodul direkt mit einem Wärmeaustauschmedium durchströmt. Dadurch ergibt sich eine Reihe von Vorteilen gegenüber den Batterien des Standes der Technik. Es entfallen die Effizienz der Wärmeübertragung mindernde zusätzliche Schichten von beispielsweise KTL, Wärmeleitklebstoff oder Gap-Filler. Es findet kein Verlust von Kühlleistung am Gehäuse mehr statt. Das Bauprinzip ist einfach, das Zellmodul ist günstig herzustellen und sehr leicht. Es ergeben sich keine Toleranzen mehr durch Schweißverzug und Toleranz-Additionen. Für die Fertigung sind weder große Flächen noch hohe Investitionen erforderlich. Der Aufwand für Nacharbeit oder Service bzw. Kundendienst ist gering, wenn ein Teil der Kühlung undicht oder beschädigt wird. Die Module lassen sich einfach prüfen und schnell austauschen; Undichtigkeiten werden schnell gefunden.

Die Elemente für den Wärmeaustausch sind direkt in das Zellmodulgehäuse integriert. Dadurch entfallen eine separate Kühlplatte und durchströmte Kühlrohre, die in einem Batteriegehäuse üblicherweise enthalten sind, um die Kühlung mit einem aktiven Kühlmedium zu gewährleisten. Dadurch vereinfacht sich der Herstellprozess, es sinken die Herstellkosten, und es wird zudem auch die Effizienz der Kühlung gesteigert.

Die Hohlräume im erfindungsgemäßen Zellmodul dienen zusätzlich auch als integrierte "Crash-Struktur". Sie fangen bei einer in einem Kraftfahrzeug eingebauten Batterie, die aus den erfindungsgemäßen Zellmodulen aufgebaut ist, Stöße von unten ab, z. B. ein sogenanntes "Pollerfallen" oder "Aufsetzen", wobei das Wärmeaustauschmedium (bzw. die Kühlflüssigkeit) als Dämpfer fungiert.

Durch derartige Stöße hervorgerufene leichte Verformungen (Eindellungen) an der Unterseite des Zellmoduls beeinflussen die Wirkung des Wärmeaustauschs nicht, weil ein Durchfluss des Wärmeaustauschmediums weiterhin gegeben ist, da sich die Kühlmittelkanäle in lateraler Richtung plastisch verformen können und eine Eindellung eines rohrförmigen Hohlraums unproblematisch ist, solange nicht der gesamte Querschnitt des Hohlraums blockiert wird. Dies erhöht die Betriebssicherheit des Kraftfahrzeugs und verhindert Ausfälle durch Beschädigungen der Batterie, bzw. reduziert im Falle einer Beschädigung die Kosten für den Fahrzeugeigentümer oder dessen Versicherung.

Gegenstand der Erfindung ist auch eine Batterie, insbesondere für ein Kraftfahrzeug, welche mindestens ein erfindungsgemäßes Zellmodul enthält. In einer Ausführungsform enthält die Batterie mehrere untereinander elektrisch und fluidisch verbundene erfindungsgemäße Zellmodule.

Gegenstand der Erfindung ist auch ein Verfahren zur Herstellung eines erfindungsgemäßen Zellmoduls. Das Verfahren umfasst die Bereitstellung mindestens eines Strangpressprofils, welches parallel angeordnete rohrförmige Hohlräume aufweist. Das Strangpressprofil wird bzw. die Strangprofile werden als mindestens eine Außenwand für das erfindungsgemäße Zellmodul verwendet und bildet bzw. bilden mit den übrigen Außenwänden ein Gehäuse für die in dem Zellmodul bzw. dem Innenraum des Gehäuses angeordneten Akkumulatorzellen. In einer Ausführungsform des Verfahrens werden Öffnungen benachbarter rohrförmiger Hohlräume mit Verbindungselementen verbunden, die eine fluidische Verbindung der benachbarten rohrförmigen Hohlräume erzeugen. In einer weiteren Ausführungsform werden die in dem Strangpressprofil enthaltenen rohrförmigen Hohlräume so durch Verbindungselemente miteinander verbunden, dass sich ein zusammenhängender Fließpfad ergibt, der mäandrierend durch das Strangpressprofil verläuft. In einer weiteren Ausführungsform mit gegenüberliegenden Anschlüssen für den Vor- und Rücklauf des Wärmeaustauschmittels verläuft eine Vielzahl paralleler Fließpfade in einer Richtung durch das Strangpressprofil.

Die Erfindung ist anhand von Ausführungsformen in den Zeichnungen schematisch dargestellt und wird unter Bezugnahme auf die Zeichnungen weiter beschrieben. Es zeigt:
- Figur 1: in einer perspektivischen Explosionsdarstellung eine Fahrzeugbatterie des Standes der Technik;
- Figur 2: in einer schematischen Darstellung verschiedene Ansichten einer Ausführungsform des erfindungsgemäßen Zellmoduls; a) Frontansicht; b) Rückansicht; c) Seitenansicht; d) Ansicht von unten;
- Figur 3: in einer schematischen Darstellung verschiedene Phasen a) bis c) eines Aufpralls einer Ausführungsform des erfindungsgemäßen Zellmoduls auf ein Hindernis.

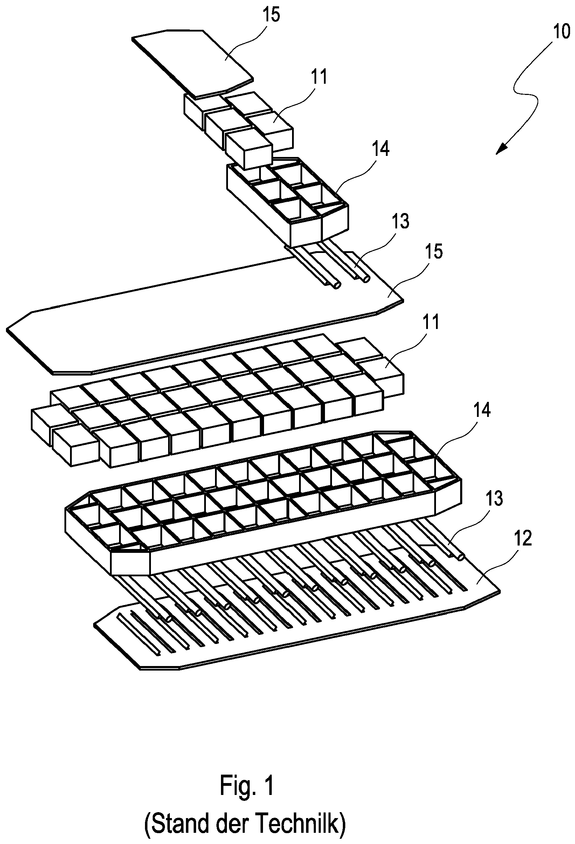

Figur 1 zeigt in einer perspektivischen Explosionsdarstellung eine Fahrzeugbatterie 10, wie sie dem Stand der Technik entspricht. Die Batterie 10 enthält eine Anzahl von Zellmodulen 11, die auf zwei übereinander liegenden Ebenen jeweils in einem Gehäuse 14 montiert sind. Jedes Gehäuse 14 wird mit einem Deckel 15 verschlossen und abgedichtet. Die Zellmodule 11 in den beiden Gehäusen 14 werden jeweils über unter dem Boden des Gehäuses 14 angeordnete Kühlrohre 13 gekühlt. Den Abschluss der Batterie 10 nach unten bildet ein Unterfahrschutz 12, der die Batterie 10 vor Beschädigungen durch Stöße von unten schützen soll und die Kühlrohre 13 fixiert.

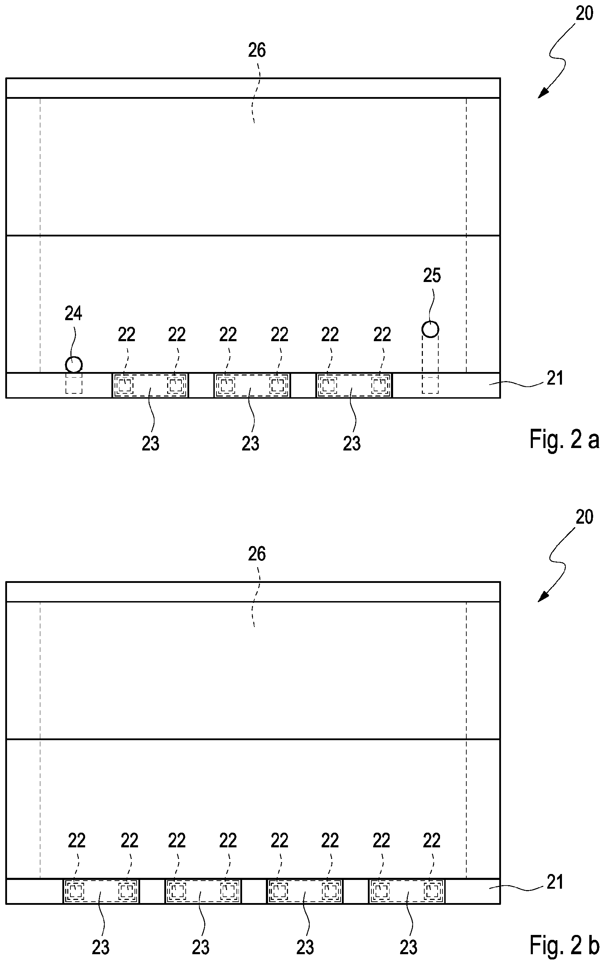

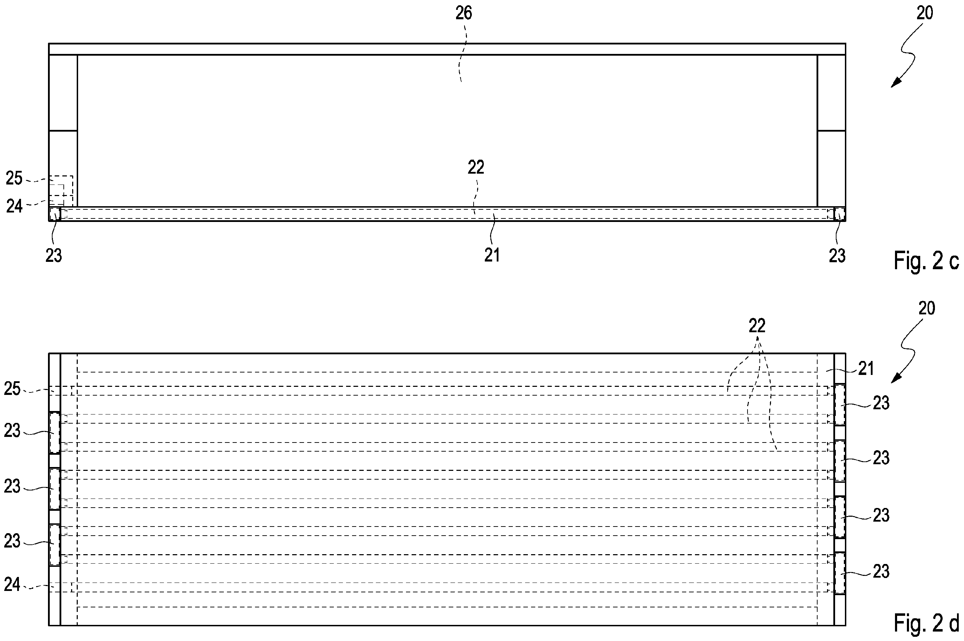

Figur 2 zeigt in einer schematischen Darstellung verschiedene Ansichten einer Ausführungsform des erfindungsgemäßen Zellmoduls 20. Figur. 2a zeigt eine Ansicht des Zellmoduls 20 von vorne; Figur 2b eine Ansicht von hinten; Figur 2c eine Ansicht von der Seite; und Figur 2d eine Ansicht von unten.

In der gezeigten Ausführungsform weist eine Außenwand des Zellmoduls 20, nämlich die Bodenplatte 21, eine Anzahl rohrförmiger Hohlräume oder Kühlmittelkanäle 22 auf, die parallel zueinander verlaufen und sich von einer Kante bzw. Stirnfläche der Bodenplatte 21 zur gegenüberliegenden Kante bzw. Stirnfläche erstrecken.

An den beiden am weitesten voneinander entfernten Kühlmittelkanälen 22 befinden sich eine Zuleitung 24 für den Kühlmittelvorlauf bzw. eine Ableitung 25 für den Kühlmittelrücklauf. Die Anschlüsse 24 und 25 sind im Betriebszustand mit einem Kühlmittelkreislauf, z.B. dem Kühlsystem eines Kraftfahrzeugs, und/oder parallel bzw. seriell mit anderen Zellmodulen verbunden. Wie insbesondere aus Figur 2d ersichtlich, sind die Öffnungen benachbarter Kühlmittelkanäle 22 jeweils durch hohle Verbindungselemente 23 verbunden. Dadurch bilden die Kühlmittelkanäle 22 und die Verbindungselemente 23 gemeinsamen einen mäandrierenden Fließpfad durch die Bodenplatte 21, der vom Kühlmitteleinlass 24 zum Kühlmittelauslass 25 verläuft. Im Betriebszustand strömt durch diesen Fließpfad ein Wärmeaustauschmedium, z.B. eine Kühlflüssigkeit. Über die Bodenplatte 21 wird Wärme zwischen dem Wärmeaustauschmedium und im Innenraum 26 des Zellmoduls 20 angeordneten Akkumulatorzellen (in der Zeichnung nicht dargestellt) ausgetauscht.

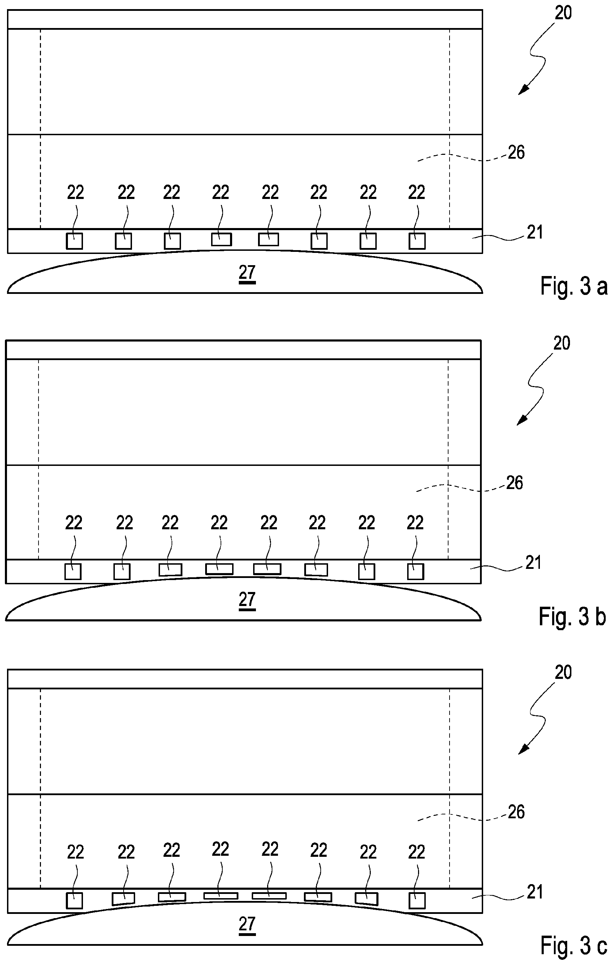

Figur 3 zeigt in einer schematischen Darstellung verschiedene Phasen a) bis c) eines Aufpralls einer Ausführungsform des erfindungsgemäßen Zellmoduls 20 auf ein Hindernis 27. Das Zellmodul 20 ist in Rückansicht dargestellt. Wie in den Abbildungen a) bis c) illustriert, die aufeinanderfolgende Phasen des Aufpralls auf das Hindernis 27 zeigen, dienen die Hohlräume 22 im Zellmodul 20 bei einem Aufprall auf ein Hindernis 27 bzw. einem Stoß von unten gegen die Bodenplatte 21 als integrierte "Crash-Struktur", wobei das Wärmeaustauschmedium (bzw. die Kühlflüssigkeit) in den Hohlräumen bzw. Kühlmittelkanälen 22 als Dämpfer fungiert. Die Hohlräume 22 nehmen die Aufprallenergie auf und verformen sich plastisch. Dabei verringert sich ihr Querschnitt in Richtung des Aufpralls und erweitert sich senkrecht dazu in der Bodenplatte 21 nach beiden Seiten hin.

### Bezugszeichenliste

- 10: Batterie
- 11: Zellmodul
- 12: Unterfahrschutz
- 13: Kühlrohr
- 14: Gehäuse
- 15: Deckel
- 20: Zellmodul
- 21: Bodenplatte
- 22: Hohlraum/Kühlmittelkanal
- 23: Verbindungselement
- 24: Kühlmittelzuleitung/Vorlauf
- 25: Kühlmittelauslass/Rücklauf
- 26: Innenraum
- 27: Hindernis

## Patentansprüche

1. Zellmodul (20) für eine Batterie (10), insbesondere eine Traktionsbatterie für ein Kraftfahrzeug, bei dem mindestens eine Außenwand (21) des Zellmoduls (20) rohrförmige Hohlräume (22) aufweist, welche sich über die gesamte Länge bzw. die gesamte Breite der Außenwand (21) erstrecken und dafür eingerichtet sind, mit einem Wärmeaustauschmedium durchströmt zu werden.

2. Zellmodul nach Anspruch 1 bei dem die rohrförmigen Hohlräume (22) parallel zueinander angeordnet sind.

3. Zellmodul nach Anspruch 1 oder 2, bei dem die Außenwand (21) ein durch Strangpressen hergestelltes Profil umfasst.

4. Zellmodul nach einem der Ansprüche 1 bis 3, bei dem die Öffnungen zweier nebeneinander liegender rohrförmiger Hohlräume (22) durch ein hohles Verbindungselement (23) verbunden sind.

5. Zellmodul nach Anspruch 4, bei dem das Verbindungselement (23) als U-förmige Steckbrücke ausgebildet ist.

6. Zellmodul nach Anspruch 4 oder 5, bei dem das Verbindungselement (23) Dichtlippen aufweist, welche die Öffnungen der Hohlräume (22) abdichten, so dass zwischen dem Verbindungselement (23) und den Öffnungen der Hohlräume (22) kein Wärmeaustauschmedium austreten kann.

7. Zellmodul nach einem der Ansprüche 1 bis 6, bei dem jeweils eine Öffnung der den größten Abstand voneinander aufweisenden rohrförmigen Hohlräume (22) an einen Wärmeaustauschmittelkreislauf angeschlossen ist und die übrigen Öffnungen der in der Außenwand (21) enthaltenen rohrförmigen Hohlräume (22) so jeweils paarweise mit einem Verbindungselement (23) untereinander verbunden sind, dass ein mäanderförmiger Fließpfad des Wärmeaustauschmittels durch die Hohlräume (22) gebildet wird.

8. Batterie (10), insbesondere für ein Kraftfahrzeug, welche mindestens ein Zellmodul (20) nach einem der Ansprüche 1 bis 7 enthält.

9. Batterie (10) nach Anspruch 8, welche mehrere untereinander elektrisch und fluidisch verbundene Zellmodule (20) nach einem der Ansprüche 1 bis 7 enthält.

10. Verfahren zur Herstellung eines Zellmoduls (20) für eine Batterie (10), insbesondere eine Traktionsbatterie für ein Kraftfahrzeug, umfassend die Bereitstellung mindestens eines Strangpressprofils, welches parallel angeordnete rohrförmige Hohlräume (22) aufweist; und den Zusammenbau eines Gehäuses des Zellmoduls (20) für mindestens eine in dessen Innenraum (26) angeordnete Akkumulatorzelle unter Verwendung des Strangpressprofils oder der Strangpressprofile als mindestens eine Außenwand (21) des Zellmoduls (20).
